# EUROPÄISCHE PATENTSCHRIFT

(11) **EP 0 925 866 B1**
(45) Veröffentlichungstag und Bekanntmachung des Hinweises auf die Patenterteilung: **18.09.2002**
(21) Anmeldenummer: 98122642.6
(22) Anmeldetag: 28.11.1998
(51) Int. Cl.: B23K 23/00

(54) **Giessform für eine Zwischengussschweissung zweier Schienenenden**
Mold used in an intermediate cast welding of two rail ends
Moule utilisé dans un soudage par coulée intermédiaire de deux extrémités de rails

(30) Priorität: 13.12.1997 DE 19755582; 02.05.1998 DE 19819706
(43) Veröffentlichungstag der Anmeldung: 30.06.1999
(73) Patentinhaber: Elektro-Thermit GmbH & Co. KG, 45139 Essen (DE)
(72) Erfinder: Steinhorst, Michael Dr., 45355 Essen (DE)
(74) Vertreter: Sobisch, Peter, Dipl.-Ing.

(56) Entgegenhaltungen:
- DE-B- 1 201 156
- US-A- 5 151 202

## Beschreibung

Die Erfindung bezieht sich auf eine Gießform entsprechend dem Oberbegriff des Anspruchs 1, wie sie auch aus DE 1201156B bekannt ist.

Das Verbinden zweier Schienenenden durch Zwischengußschweißung ist beispielsweise in der Form des aluminothermischen Schweißens bekannt. Es basiert auf der stark exothermen Reaktion von Eisenoxiden mit Aluminium, in deren Verlauf die Eisenoxide reduziert werden, das Eisen in schmelzflüssiger überhitzter Form anfällt und eine im wesentlichen aus Tonerde bestehende Schlacke auf der Schmelze aufschwimmt, wobei das schmelzflüssige Eisen anschließend in die Schweißfuge zwischen den Schienenenden eingebracht wird. Die Ausgangsstoffe dieser Reaktion liegen als feinkörniges, im wesentlichen aus Eisenoxid und Aluminium bestehendes Gemisch vor, dem bestimmte, unter anderem die Härte des Zwischengußgefüges bestimmende Legierungselemente wie z.B. C, Mn usw. und Eisenschrott zur Dämpfung der Reaktion beigegeben werden.

Zur Durchführung der aluminothermischen Verschweißung wird eine Gießform benutzt, die regelmäßig aus zwei Formhälften besteht, die seitlich an die um die Schweißfuge stirnseitig voneinander beabstandeten Schienenenden gesetzt werden und die durch Formhaltebleche zusammengehalten werden. Auf diese Gießform wird oberseitig ein Reaktionstiegel aufgesetzt, in den das aluminothermische Gemisch eingebracht wird, woraufhin der Reduktionsvorgang in geeigneter Weise, beispielsweise mittels eines Zündstäbchens eingeleitet wird. Nach Abschluß der Reaktion - zeitlich im allgemeinen über einen automatisch wirksamen Tiegelstöpsel gesteuert - wird der schmelzflüssige Stahl zwecks Durchführung der Zwischengußschweißung in die Gießform eingeführt.

Üblicherweise wird eine Zwischengußschweißung unter Vorwärmung der zu verbindenden Schienenenden durchgeführt. Diese Maßnahme dient einerseits dem Austreiben eventuell vorhandener Feuchtigkeit aus dem Gießraum. Sie dient andererseits dem Einstellen weitestgehend homogener Oberflächentemperaturen der Wandungen des Gießraumes, insbesondere der Stirnseiten der zu verschweißenden Schienenenden, die bei der Zwischengußschweißung oberflächlich aufgeschmolzen werden, wobei diese Wärme im wesentlichen durch den schmelzflüssigen Stahl, somit über die aluminothermische Reaktion aufgebracht werden muß.

Der in den Gießraum eingebrachte schmelzflüssige Stahl soll diesen nach Maßgabe einer definierten Gießgeschwindigkeit bzw. Gießzeit ausfüllen, welche unter anderem durch die Wärmeabflußbedingungen, insbesondere die Abkühlgeschwindigkeiten im Bereich der Wandungen der Gießform bestimmt wird. Nach Maßgabe der unterschiedlichen Wärmeleitfähigkeiten der Gießformwandungen einerseits und des Schienenkörpers andererseits, in einem geringeren Maße auch durch Witterungsverhältnisse beeinflußt, bildet sich entsprechend diesen örtlich unterschiedlichen Wärmeabfuhr- und - hiermit zusammenhängend - Abkühlgeschwindigkeiten in den Randbereichen der Schmelze ein dementsprechendes Temperaturfeld aus, durch welches seinerseits der Kristallisationsprozeß bestimmt wird.

Die Erstarrung schmelzflüssiger Metalle ist üblicherweise mit einer Volumenkontraktion verbunden, so daß es in Abhängigkeit von dem örtlichen Fortschritt des Kristallisationsprozesses, insbesondere der örtlichen Erstarrung zur Ausbildung von Lunkern kommen kann. Lunker treten stets dann auf, wenn schmelzflüssige Anteile des Stahles von bereits erstarrten Anteilen umgeben sind, so daß die inneren schmelzflüssigen Anteile noch einer Volumenkontraktion unterliegen, die bei den äußeren Anteilen bereits abgeschlossen ist. Eine Lunkerbildung folgt somit einem Temperaturfeld, welches in Randbereichen durch niedrigere Temperaturen als in Kernbereichen gekennzeichnet ist.

Zur Vermeidung von Lunkerbildung ist die Gießform mit einem System von Steigern bzw. Speisern versehen, die z.B. mit dem Bereich des Schienenfußes und des Schienenkopfes in Verbindung stehen. Diese Steiger bilden ein Reservoir für schmelzflüssiges Metall einerseits und Wärme andererseits. Der mit den Steigern auf den Kristallisationsprozeß angestrebte Einfluß besteht darin, daß aus diesen schmelzflüssiger Stahl zwecks Ausgleichs einer Volumenkontraktion in kritische Zonen des Zwischengußgefüges eingebracht wird und darin, daß mit diesem Einbringen schmelzflüssigen Stahles gleichzeitig Wärme nachgeführt wird, wobei ein Temperaturfeld eingestellt werden soll, welches auf die Vermeidung des Einschließens schmelzflüssiger Anteile abzielt.

Aus der DE-C-196 20 374 ist eine gattungsgemäße, zur Verwendung zum Zwischengußschweißen zweier Schienenenden bestimmte Gießform bekannt. Diese ist im Bereich des Schienenfußes mit einem System von Fußsteigern und Luftkanälen versehen, die beiderseits der Schienenenden, und zwar in einer bezüglich einer Quermittelebene symmetrischen Flächenverteilung mit dem Schienenfuß in Verbindung stehen. Mittels eines solchen, dem Schienenfuß zugeordneten Steigersystems läßt sich die Ausbildung von Schrumpflunkern im Übergangsbereich des Schienenfußes zum Schienensteg wirksam vermeiden.

Es ist weiter bekannt, dem Schienenkopf einen Kopfsteiger zuzuordnen, der zumindest mit dem oberen Bereich des Schienenkopfes in unmittelbarer Verbindung steht. Es ist ferner bekannt, oberhalb des Schienenkopfes in der Formwandung einen Überlauf, auch Kopfseitensteiger genannt, anzubringen. Der Zweck dieses Kopfsteigersystems besteht darin, in den relativ massereichen Schienenkopf während des Erstarrungsprozesses schmelzflüssiges Metall und Wärme nachzuführen, um eine vorzugsweise von unten nach oben gerichtete, ein Einschließen flüssiger Anteile vermeidende Erstarrung zu erreichen.

Es ist jedoch festgestellt worden, daß auch auf diesem Wege die Ausbildung von Schrumpflunkern insbesondere in dem äußerst kritischen Übergangsbereich zwischen dem relativ massearmen Schienensteg und dem Schienenkopf in vielen Fällen nicht verhindert werden kann.

Es ist demzufolge die Aufgabe der Erfindung, eine Gießform der eingangs bezeichneten Art dahingehend auszugestalten, daß in einfacher, jedoch wirksamer Weise eine Schrumpflunkerbildung insbesondere in dem Übergangsbereich zwischen Schienensteg und Schienenkopf unterdrückt und ein beruhigter Reaktionsablauf ermöglicht wird. Gelöst ist diese Aufgabe bei einer solchen Gießform durch die Merkmale der Kennzeichnungsteile der Ansprüche 1 oder 2.

Eine erste erfindungswesentliche Maßnahme besteht in einer Anordnung des Kopfseitensteigers derart, daß dessen gießraumseitiger Einmündungsqerschnitt unmittelbar an die untere Kante der Kopfflanke des Schienenkopfes anschließt und sich ausgehend von dieser Kante aufwärts erstreckt. Die Querschnittsform des Kopfseitensteigers ist grundsätzlich beliebig - ihre Plazierung erfolgt im übrigen vorzugsweise symmetrisch bezüglich einer Quermittelebene der Schweißfuge. Der Kopfseitensteiger steht mit den Fußsteigern in durchgängiger Verbindung, so daß in unmittelbarer Nähe der unteren Kante der Kopfflanke ein nach Maßgabe der absoluten Größe des Querschnitts des Kopfseitensteigers großflächiger Kontakt zu dem Schienenkopf besteht. Dies bedeutet, daß eine vorzeitige Erstarrung von Randzonen des Schienenkopfes insbesondere in dem unteren kritischen Übergangsbereich wirksam unterdrückt wird, indem an dieser Stelle schmelzflüssiger Stahl und Wärme nachgeführt werden. Der Schienenkopf unterliegt somit oberseitig und im Bereich der Kopfflanken einer intensiven Beeinflussung durch Steigersysteme, welche dazu beitragen, daß sich eine gerichtete, innerhalb des Schienenkopfvolumens von unten nach oben verlaufende Erstarrung ergibt. Eine weitere erfindungsgemäße Maßnahme liegt in der Bemessung der Fläche des Einmündungsquerschnitts eines Kopfseitensteigers. Die von dem Kopfseitensteiger auszuübende Wirkung hängt quantitativ unter anderem von der Masse des in dem Gießraum erstarrenden schmelzflüssigen Stahles ab, somit von der Breite der Schweißfuge und der Höhe des Schienenkopfes. Diese beiden Einflußparameter, nämlich die Höhe des Schienenkopfes und die Breite der Schweißfuge erfassen den Einfluß des Schienenkopfvolumens und das durch dieses zumindest qualitativ umschreibbare Wärmespeichervermögen, durch welches der zeitliche Ablauf der Ausbreitung von Temperaturfeldern und Kristallisationsfronten bestimmt wird. Ein weiterer, die zitierte Wirkung beeinflussender Parameter besteht in der Dicke des Schienensteges. Eine weitere erfindungsgemäße Maßnahme wird in der Gestaltung des Kopfsteigers gesehen, der insgesamt eine in Richtung auf den Schienenkopf hin sich konisch verjüngende Gestalt aufweist. Diese Maßnahme führt global zu einer auf den Schienenkopf hin konzentrierten Material- und Wärmeübertragung. Im Falle der Benutzung des Kopfsteigers zum Einführen des schmelzflüssigen Stahles in die Gießform kann ferner durch entsprechende Bemessung der Konizität erreicht werden, daß die Strecke, innerhalb welcher die Schmelze frei fällt, relativ kurz bemessen ist, so daß auf diesem Wege zu einer geordneten Strömungsführung beigetragen werden kann. Indem die Fläche des Einmündungsquerschnitts des Kopfseitensteigers nach Maßgabe der Dicke des Schienensteges in dem angegebenen Bereich bemessen wird, kann durch die Gesamtheit dieser Maßnahmen die Ausbildung von Schrumpflunkern im Übergangsbereich zwischen Schienensteg und Schienenkopf wirksam unterdrückt werden.

Die Lösung der eingangs dargelegten Aufgabe kann bei einer gattungsgemäßen Gießform gleichermaßen durch die Merkmale des Kennzeichnungsteils des Anspruchs 2 bewirkt werden. Diese betreffen einen konischen Verlauf des Kopfsteigers beiderseits des Profils des Schienenkopfes, wobei sich die angegebenen Bereiche der Maße x und y als besonders vorteilhaft erwiesen haben.

Die zitierte Fläche des Einmündungsquerschnitts ist entsprechend den Merkmalen des Anspruchs 3 rechteckig oder quadratisch ausgebildet und durch Seiten a und b gekennzeichnet. Es ist dies eine besonders vorteilhafte Ausgestaltung des Querschnitts.

Die Merkmale der Ansprüche 4 bis 15 sind - in Abhängigkeit von der absoluten Dicke des Schienensteges auf die weitere Präzisierung der Fläche A des Einmündungsquerschnitts bzw. der Seitenlängen a und b gerichtet. Wird die Fläche A bzw. werden die Seiten a, b innerhalb der angegebenen erfindungsgemäßen Bereiche bemessen, ergibt sich die bereits zitierte Wirkung, daß nämlich der Bildung von Schrumpflunkern im Übergangsbereich zwischen Schienensteg und Schienenkopf wirksam begegnet wird.

Die Merkmale der Ansprüche 16 bis 27 sind auf die weitere Ausgestaltung des Kopfsteigers gerichtet. Die Geometrie des Kopfsteigers wird durch mehrere Parameter definiert, die ihrerseits in funktionaler Abhängigkeit von geometrischen Größen des Schienenprofils stehen. Es handelt sich im einzelnen um die Parameter H, die Höhe des Kopfsteigers, B, die Breite des Kopfsteigers sowie die Maße x und y, mittels welchen die Breite und die Geometrie der beiderseits der Kopfflanken bestehenden und durch die zugekehrten Wandungen der Gießform bestimmten Spalte definiert werden, welche Teile des Kopfsteigers bilden, die den Schienenkopf seitlich umfassen. Indem diese Parameterkonstellation nach Maßgabe der beanspruchten Bereiche gewählt wird, wird ebenfalls im Sinne der Aufgabenstellung dazu beigetragen, eine von unten nach oben fortschreitende gerichtete Erstarrung der Schmelze unter Vermeidung von Schrumpflunkern insbesondere im Übergangsbereich zwischen Schienensteg und Schienenkopf zu erreichen.

Die Merkmale des Anspruchs 30 sind auf eine weitere Ausgestaltung der Gießform gerichtet, welche darauf abzielt, einen beruhigten Reaktionsablauf nach der Zündung des aluminothermischen Gemisches zu erreichen. Zu diesem Zweck ist ein Formenaufsatz vorgesehen, der einen vorzeitigen Wärmeverlust verhindert, so daß insgesamt eine Absenkung der Gießtemperatur ermöglicht wird, ohne daß sich nachteilige Folgen für die Qualität der Verschweißung ergeben. Bekanntlich fällt infolge der exothermen Reaktion nach der Zündung des aluminothermischen Gemisches ein überhitzter Stahl mit Temperaturen von oberhalb 2000° C an, wobei unter anderem aufgrund verbrennendem Kohlenstoffs eine heftige Gas- bzw. Rauchentwicklung einsetzt, die mit einem Austreten von Flammen aus dem Reaktionstiegel und auch einem Auswurf von Stahl verbunden ist. Dieses Reaktionsbild wird im Zuge eines gestiegenen Umweltbewußtseins als störend empfunden und führt zu der Forderung nach Maßnahmen zur Dämpfung des Reaktionsablaufs. Es ist zwar bekannt, den Reaktionsablauf durch Zugabe von wärmebindenden Elementen, z.B. Eisenschrott zu dämpfen - dies ist jedoch im allgemeinen infolge der hierdurch bedingten Absenkung der Temperatur des schmelzflüssigen Stahles mit Hinblick auf insgesamt zu erwartende Wärmeverluste und eine nicht mehr zu tolerierende Absenkung der Gießtemperatur bedenklich. Indem erfindungsgemäß jedoch die Wärmeverluste während der aluminothermischen Reaktion begrenzt werden, indem nämlich der genannte Formenaufsatz verwendet wird, der entweder ein integraler Bestandteil der Gießform sein kann oder ein von diesem getrenntes Bauteil, besteht die Möglichkeit mit einer niedrigeren Gießtemperatur zu arbeiten, so daß mit der erfindungsgemäßen Gießform auch den Belangen des Umweltschutzes Rechnung getragen worden ist. Der Formenaufsatz kann aus einem feuerfesten Werkstoff auf der Basis von Zirkondioxid bestehen - mit Hinblick auf die zu erwartenden Kosten wird jedoch einer Ausbildung aus einem Werkstoff auf der Basis von Quarzsand der Vorzug gegeben.

Die Merkmale der Ansprüche 31 bis 39 sind auf die weitere Ausgestaltung der Innenwandungen des Kopfsteigers gerichtet, und zwar zwischen dem oberen offenen Ende und dem Bereich der Kopfseitensteiger. Angestrebt wird in diesem Bereich eine global einwärts, d.h. in Richtung auf eine Mittelebene der zu verbindenden Schienenenden hin gerichtete Strömungsführung des schmelzflüssigen Stahls, und zwar mit dem Ziel, insbesondere in den kritischen Übergangsbereich zwischen Schienenkopf und Schienensteg sowohl Stahl als auch Wärme nachzuführen, um hier ein Auftreten von Schrumpflunkern zu vermeiden. Die Innenwandungen können hierbei zwischen den genannten oberen und unteren Enden einen stetig gekrümmten Verlauf haben - dieser Verlauf kann jedoch auch durch wenigstens zwei ebene Abschnitte approximiert werden. Die angegebenen Bereiche der Neigungswinkel α und β nach Maßgabe des bezeichneten Parameters z haben sich in diesem Zusammenhang als besonders vorteilhaft erwiesen.

Es sind unter Wahrung der Zweckbestimmung der Innenwandungen zahlreiche Modifikationen möglich. So können insbesondere stetige Neigungsübergänge zu den sich an die genannten Abschnitte anschließenden Wandungsabschnitte gegeben sein. Angestrebt wird in jedem Fall eine beruhigte Strömung des Stahls.

Die Erfindung wird im folgenden unter Bezugnahme auf das in den Zeichnungen schematisch wiedergegebene Ausführungsbeispiel näher erläutert werden. Es zeigen:
Fig. 1 einen Querschnitt einer durch Zwischengußschweißung hergestellten Schienenverbindung entsprechend einer Schnittebene I-I der Fig. 2;
Fig. 2 einen teilweisen Horizontalschnitt einer Schienenverbindung entsprechend einer Schnittebene II-II der Fig. 1;
Fig. 3 einen Querschnitt einer erfindungsgemäßen, die zu verbindenden Schienenenden im Zwischengußbereich umgebenden Gießform;
Fig. 4 eine Seitenansicht des Zwischengußbereiches zweier miteinander verschweißter Schienenenden mit zusätzlicher Darstellung der Projektionsfläche des Querschnitts des Kopfseitensteigers;
Fig. 5 einen Querschnitt einer anderen erfindungsgemäßen, die zu verbindenden Schienenenden im Zwischengußbereich umgebenden Gießform;
Fig. 6 eine vergrößerte Teildarstellung einer erfindungsgemäßen Gießform im Bereich der Wandungen des Kopfsteigers.

Mit 1, 2 sind in den Zeichnungsfiguren 1 und 2 zwei durch Zwischengußschweißung miteinander verbundene Schienenenden bezeichnet, deren Verbindungsbereich durch einen Schweißwulst 3 mit der Breite W gekennzeichnet ist. Der Schweißwulst 3 überdeckt die zwischen den Schienenenden 1, 2 bestehende Schweißfuge 4 mit der Breite L symmetrisch bezüglich einer Quermittelebene 5 und weist im übrigen eine aus den Oberflächen der zueinander fluchtenden Schienenenden 1, 2 ausgewölbte, die Schweißfuge 4 im wesentlichen vollständig umgebende Gestalt auf.

Der Schienenkörper besteht jeweils aus einem zur Auflagerung beispielsweise auf zeichnerisch nicht wiedergegebenen Schwellen bestimmten Schienenfuß 6, zu dem sich senkrecht ein Schienensteg 7 erstreckt, der in einen Schienenkopf 8 übergeht. Das aus diesen drei Abschnitten bestehende Schienenprofil weist einen symmetrischen Aufbau bezüglich einer vertikalen Mittelebene 9 auf.

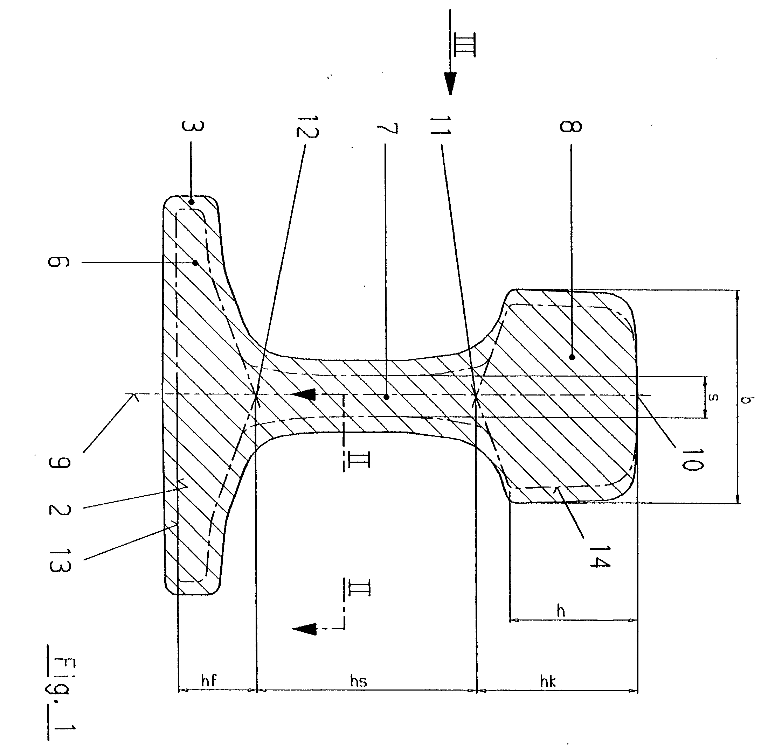

Zwischen dem Schienenfuß 6 und dem Schienensteg 7 einerseits sowie dem Schienensteg 7 und dem Schienenkopf 8 andererseits bestehen jeweils abgerundete Übergangsabschnitte, so daß als Scheitelhöhe hₖ des Schienenkopfes 8 - in der Zeichenebene der Fig. 1 gesehen - der Abstand zwischen dem Scheitelpunkt 10 des Schienenkopfes 8 und dem Schnittpunkt 11 zweier an die Unterseiten des Schienenkopfprofils gelegter Tangenten entspricht, wobei aufgrund der Symmetrieeigenschaften des Schienenprofils die Punkte 10 und 11 auf der Spur der Mittelebene 9 liegen. Die Steghöhe hₛ ist definiert durch den Abstand zwischen dem genannten Schnittpunkt 11 und einem Schnittpunkt 12 zweier, an die Oberseiten des Profils des Schienenfußes 6 gelegter Tangenten, der wiederum auf der genannten Spur der Mittelebene 9 liegt. Schließlich ergibt sich die Fußhöhe h_{f} als Abstand zwischen dem Schnittpunkt 12 und der ebenen Unterseite 13 des Schienenfußes.

Die Schienenkopfhöhe h - wiederum in der Zeichnungsebene der Fig. 1 gesehen - ist definiert als vertikaler Abstand zwischen dem Scheitelpunkt 10 und dem Punkt der Kopfflanken 14, von dem an sich die Kontur der Kopfflanke einwärts, d.h. in Richtung auf die Mittelebene 9 hin erstreckt.

Die Stegbreite s ist definiert als Wert der Stegdicke an der schmalsten Stelle des Steges, d.h. ungefähr in einem mittleren Bereich der Steghöhe hₛ.

Schließlich ist die Schienenkopfbreite b definiert als horizontale Breite des Schienenkopfes 8 an dessen breitester Stelle.

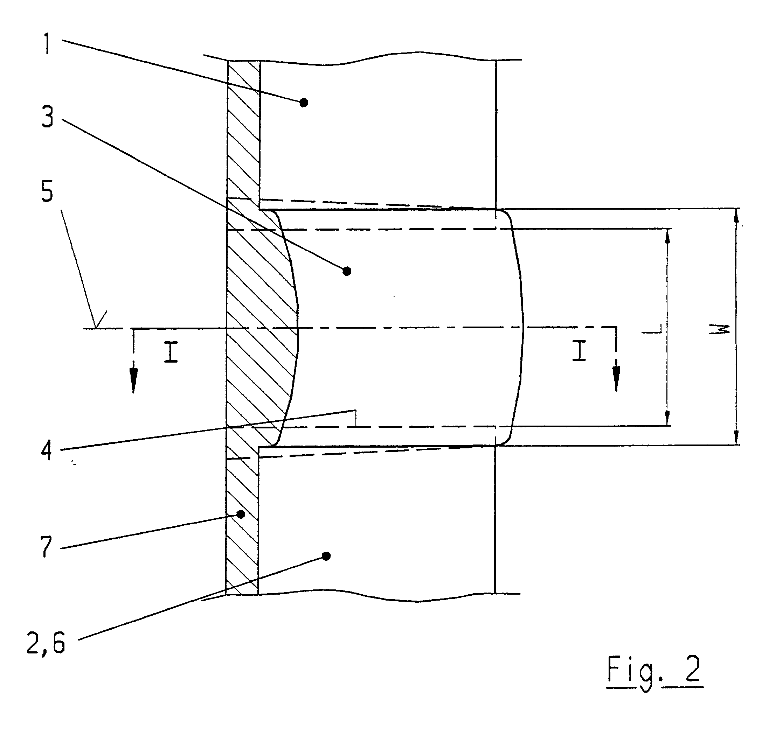

Es wird im folgenden auf die Zeichnungsfiguren 3 und 4 Bezug genommen, bei denen Elemente, die mit denjenigen der Fig. 1 und 2 übereinstimmen, entsprechend beziffert sind.

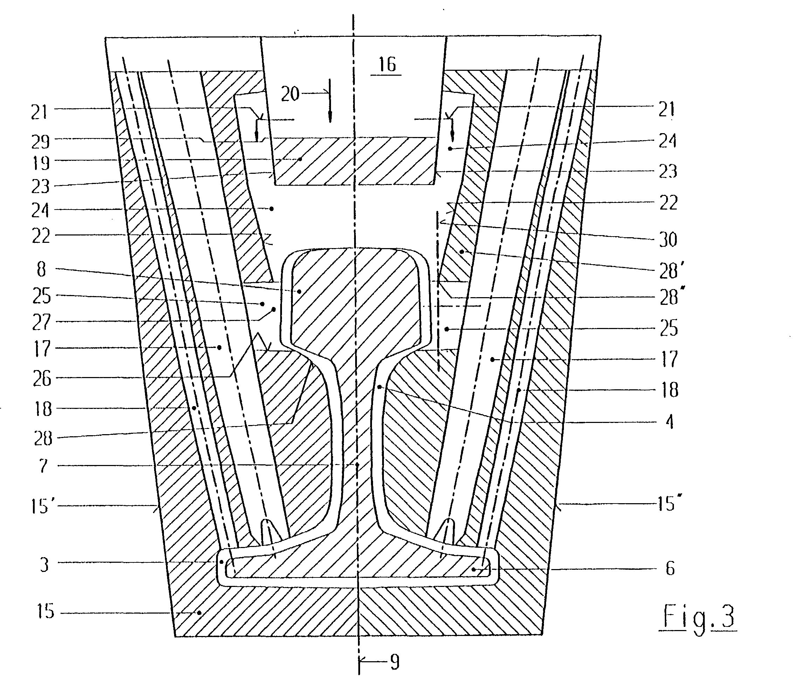

Fig. 3 zeigt eine Querschnittsdarstellung der erfindungsgemäßen Gießform 15, die einen symmetrischen Aufbau bezüglich der vertikalen Mittelebene 9 aufweist und global aus zwei Formhälften 15', 15'' besteht, die die zu verbindenden Schienenenden 1, 2 seitlich, die Schweißfuge symmetrisch überdeckend, umfassen. Die Formhälften bestehen aus feuerfestem Material, z.B. wasserglasgebundenem Quarzsand und es wird der durch die Stirnseiten der um die Schweißfuge beabstandeten Schienenenden 1, 2 und im übrigen durch die Wandungen der Gießform umgrenzte Gießraum gegenüber dem Schienenprofil durch feuerfesten Sand abgedichtet.

Die Formhälften 15', 15'' werden durch zeichnerisch nicht wiedergegebene Formhaltebleche zusammengehalten.

Zeichnerisch ebenfalls nicht dargestellt ist der anfänglich unterseitig mit einem Tiegelstöpsel abgeschlossene Reaktionstiegel, in den das aluminothermische Gemisch eingebracht wird und in dem die zur Bereitstellung schmelzflüssigen Stahls erforderliche Reaktion durchgeführt wird. Aus diesem Reaktionstiegel, der oberseitig auf die Gießform aufgesetzt ist, tritt schmelzflüssiger Stahl an der Stelle 16 in die Gießform ein.

Mit 17 sind Fußsteiger bezeichnet, die an ihrem unteren Ende im Bereich des Schienenfußes 6 in den Gießraum einmünden. Die Fußsteiger 17 erstrecken sich unter einem Winkel und symmetrisch zur Spur der Mittelebene 9.

Mit 18 sind Luftkanäle bezeichnet, deren untere Enden ebenfalls im Bereich des Schienenfußes in den Gießraum einmünden. Die Luftkanäle 18 erstrecken sich im wesentlichen parallel zu den Fußsteigern 17, und zwar an den äußersten Randbereichen des Schienenfußes 6.

Die auf die Oberfläche des Schienenfußes 6 bezogene Verteilung der Fußsteiger 17 und Luftkanäle 18 erfolgt vorzugsweise derart, daß der Flächenschwerpunkt des Querschnitts eines jeden Fußsteigers 17 in der Quermittelebene 5 der Schweißfuge angeordnet ist und daß auf einer Seite des Schienenprofils beispielsweise zwei Luftkanäle vorgesehen sind, und zwar mit der Maßgabe, daß sich die Flächenschwerpunkte dieser beiden Luftkanäle beiderseits der Quermittelebene 5 befinden und daß eine symmetrische Flächenverteilung dieser Luftkanäle bezüglich dieser Quermittelebene gegeben ist.

Mit 19 ist ein oberseitig in die Gießform eingesetzter Riegel bezeichnet, der aus einem der Gießform entsprechenden feuerfesten Werkstoff ausgebildet ist und dessen Zweck darin besteht, den oberseitig in Richtung des Pfeiles 20 in die Gießform eingebrachten schmelzflüssigen Stahl gleichförmig in Richtung der Pfeile 21 zu verteilen und in den durch die Stirnseiten der Schienenenden 1,2 , die Innenwandungen 22 und Formwandungen 28 umgrenzten Gießraum einzuführen. Zwischen den in Richtung auf die Schweißfuge, somit zur Unterseite hin konisch einwärts orientierten Innenwandungen 22 der Gießform erstreckt sich der Kopfsteiger 24. Die Seitenwandungen 23 des Riegels 19 erstrekken sich angenähert parallel zu den Innenwandungen 22.

Mit 25 sind Kopfseitensteiger bezeichnet, die sich ausgehend von dem Gießraum im wesentlichen horizontal erstrecken und mit den bereits genannten Fußsteigern 17 in durchgängiger Verbindung stehen. In den Querschnitt der Kopfseitensteiger 25 ist unterseitig das Profil des Schweißwulstes 3 eingeformt. Die Achsen der beiden Kopfseitensteiger 25 können eine leichte Neigung zur Innenseite der Schweißfuge hin aufweisen. Die Kopfseitensteiger 25 sind im übrigen - sieht man von dem Profilanteil des unterseitigen Schweißwulstes ab - derart plaziert, daß - in der Zeichnungsebene der Fig. 3 gesehen - die Verlängerung der Unterkanten 26 die Kopfflanke 14 des Schienenkopfes 8 an deren unterer Kante trifft, an welche sich die zur Mittelebene 9 hin einwärts orientierten Flankenabschnitte desselben anschließen.

Die Konizität der Innenwandungen 22 ist im Verhältnis zur seitlichen Begrenzung des Riegels 19 dahingehend bemessen, daß in Richtung der Pfeile 21 strömender schmelzflüssiger Stahl entlang der Innenwandungen 22, somit einwärts strömt und auf diese Weise eine Führung an den Einmündungsquerschnitten 27 der Kopfseitensteiger 25 vorbei in Richtung auf die Formwandungen 28 der Gießform 15 hin erfährt. Ein freier Fall des schmelzflüssigen Stahles, ausgehend von den äußeren Kanten 29 der Riegel 19 bis zu den Formwandungen 28 hin ist somit aus geometrischen Gründen ausgeschlossen, so daß eine eindeutige Strömungsführung vorliegt.

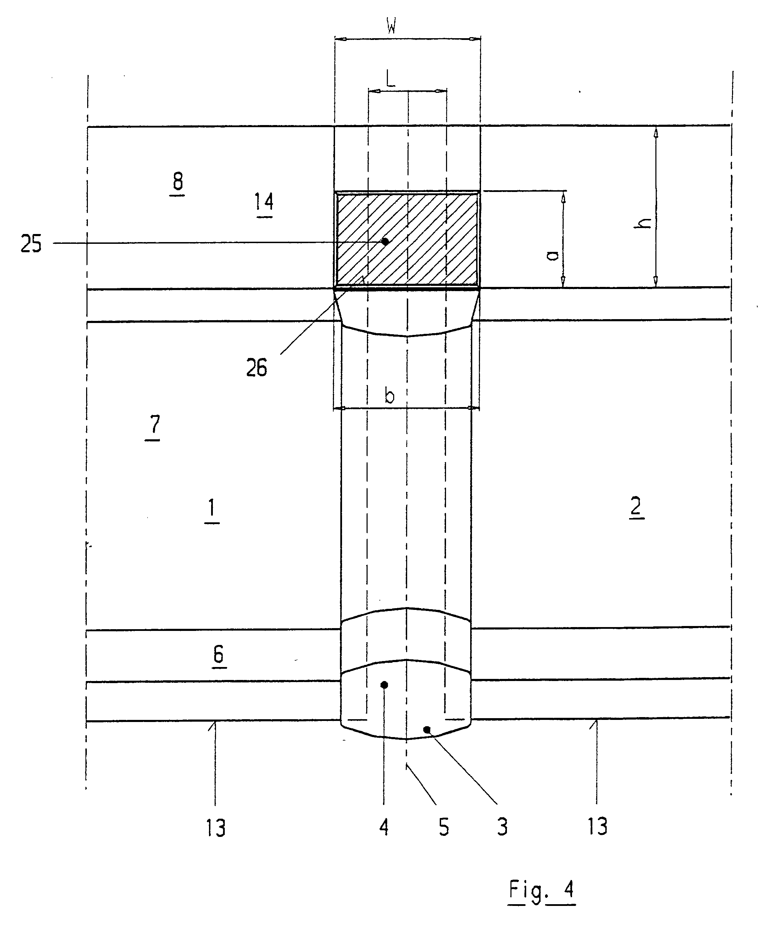

Wie insbesondere Fig. 4 zeigt, weist der Kopfseitensteiger 25 bei der in dieser Zeichnungsfigur gezeigten bevorzugten Ausführungsform eine rechteckige Querschnittsgestalt auf, und zwar nach Maßgabe einer Höhe a senkrecht zur Ebene der Unterseite 13 der Schienenenden und einer Breite b in horizontaler Richtung, somit parallel zu der genannten Unterseite 13. Bei der durch die Höhe a und die Breite b gekennzeichneten Querschnittsfläche A handelt es sich um die Querschnittsfläche des Kopfseitensteigers 25 in der in Fig. 3 gezeigten Vertikalebene 30, deren räumliche Orientierung einer innenseitigen vertikalen, sich parallel zu der Mittelebene 9 erstreckenden, die Gießformwand 28' im Bereich der oberen Umrandungskante 28'' des Kopfseitensteigers 25 tangierenden Ebene entspricht.

In dem gezeigten Ausführungsbeispiel entspricht das Breitenmaß b der Breite W des Schweißwulstes 3 und es ist der Kopfsteiger 24 im übrigen derart angeordnet, daß die Breite L der Schweißfuge 4 symmetrisch bezüglich der Quermittelebene 5 überdeckt ist. Charakteristisch ist ferner, daß das Höhenmaß a lediglich einem Teil des Höhenmaßes h der Kopfhöhe entspricht. Schließlich ist wesentlich, daß die Unterkante 26 der Querschnittsfläche des Kopfseitensteigers 25 mit der Unterkante des Schienenkcpfes 8 - in der Projektion der Zeichenebene der Fig. 4 gesehen - zusammenfällt. Nachdem das Profil des Schweißwulstes 3 in dem Querschnitt des Kopfseitensteigers 25 fortgesetzt ist, findet lediglich in den mittleren Bereichen eine nach Maßgabe der absoluten Dicke des Schweißwulstes 3 - senkrecht zur Schienenoberfläche gesehen - eine Unterschreitung der Unterkante des Schienenkopfes 8 statt.

Erfindungsgemäß sind nunmehr die absoluten Maße a und b der Querschnittsfläche des Kopfseitensteigers 25 in der genannten Ebene 30 in Abhängigkeit von der Stegbreite s sowie der Breite L der Schweißfuge 4 gewählt. In Anbetracht der Zielsetzung der vorliegenden Erfindung, nämlich die Ausbildung von Lunkern insbesondere im Übergangsbereich von Schienensteg und Schienenkopf zu unterdrücken, wird sowohl durch die Querschnittsbemessung der Kopfseitensteiger 25 als auch deren Anordnung relativ zur Struktur des Schienenprofils erreicht, daß eine vorzeitige Abkühlung des Übergangsbereichs zwischen Schienensteg und Schienenkopf unterbunden wird, da über die Kopfseitensteiger 25 in diese kritischen Bereiche während des Erstarrungsprozesses schmelzflüssiger Stahl und Wärme nachgeführt werden. Indem nämlich insbesondere im Bereich der unteren Kopfflanken des Schienenkopfes ein verbessertes Nachfließvermögen von Restschmelze bzw. Nachführvermögen von Wärme sichergestellt ist, wird verhindert, daß zonenweise flüssiger Stahl von bereits erstarrtem umgeben ist. Zu diesem Ergebnis trägt die Wirkung der Kopfsteiger 24 bei, durch welche in den relativ voluminösen Schienenkopfbereich quasi allseitig Restschmelze und Wärme eingespeist wird, so daß bei dieser Ausbildung der Gießform, insbesondere der dem Schienenkopfbereich zugeordneten Steigersysteme eine gerichtete, von unten nach oben fortschreitende Erstarrung des Schienenkopfanteils gegeben ist.

Entsprechend den von der Dicke des Schienensteges abhängigen Temperaturfeldern und - hiermit zusammenhängend - dem durch diese bestimmten zeitlichen Ablauf der Kristallisation der Schmelze im gesamten Gießraum ergeben sich quantitativ, jedoch nicht qualitativ abweichende Verhältnisse, denen durch die erfindungsgemäßen Bereiche der Querschnittsbemessung der Kopfseitensteiger 25 Rechnung getragen wird.

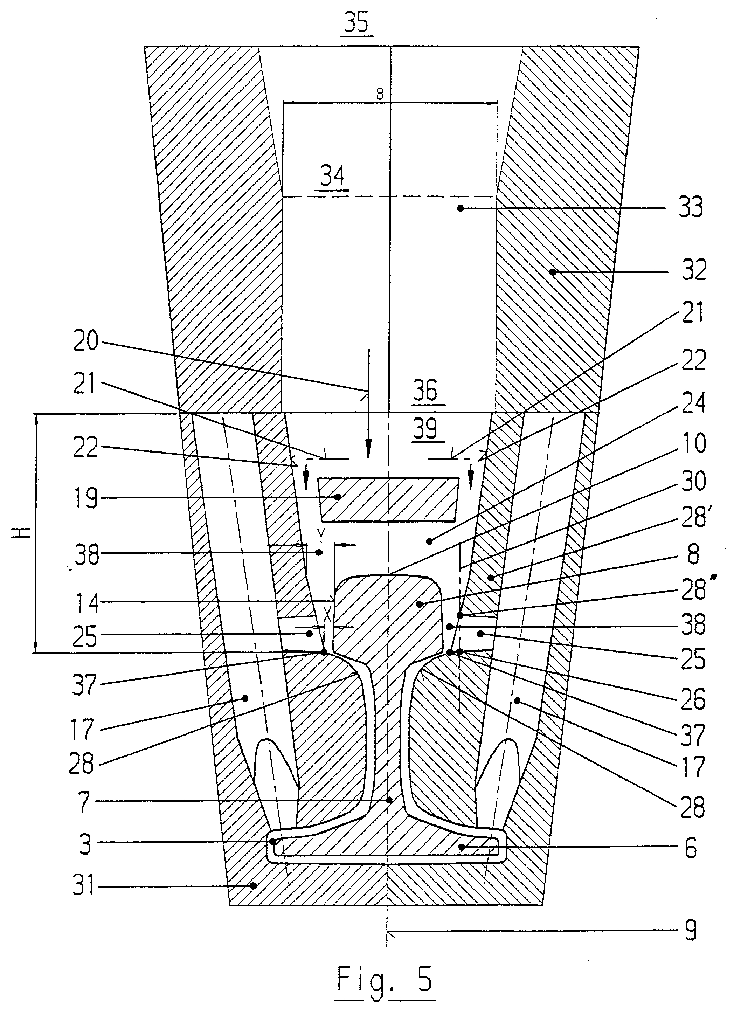

Fig. 5 zeigt ähnlich der Darstellungsweise gemäß Fig. 3 eine weitere Ausführungsform einer erfindungsgemäßen Gießform 31, bei der jedoch Funktionselemente, die denjenigen der Fig. 1 bis 4 entsprechen, gleich beziffert sind, so daß auf eine diesbezügliche wiederholte Beschreibung verzichtet werden kann.

Es ist die Gießform 31 lediglich mit Fußsteigern 17 und nicht zusätzlich mit Luftkanälen 18 ausgerüstet - sie kann jedoch zusätzlich gleichermaßen auch mit Luftkanälen versehen sein. Auf der Gießform 31 befindet sich ein Formenaufsatz 32, der grundsätzlich aus einem, dem Werkstoff der Gießform 31 entsprechenden Werkstoff bestehen kann. Er besteht jedoch vorzugsweise aus einem solchen Werkstoff bzw. ist derart bemessen, daß dessen Wandungen eine im Vergleich zu den Wandungen der Gießform höhere Wärmedämmfähigkeit aufweisen. Beispielsweise kann er aus einem feuerfesten Werkstoff auf der Basis von Zirkondioxid bestehen.

Der Formenaufsatz 32 umschließt einen ober- und unterseitig offenen Aufnahmeraum 33, der als Einsatz für den zeichnerisch nicht dargestellten Reaktionstiegel und als Aufnahmeraum für die im Verlauf der Reaktion entwickelte Schlacke dient. Hierauf soll jedoch im folgenden nicht näher eingegangen werden.

Der Aufnahmeraum 33 weist bis zu einer Stelle 34 eine, ausgehend von seinem oberen Ende 35 in Richtung auf die Gießform 31 hin sich konisch verjüngende Gestalt auf. Die Breite des Aufnahmeraumes an dieser Stelle 34 entspricht der Breite B des Kopfsteigers 24 am oberen Ende 36 der Gießform 31.

Der Formenaufsatz 32 und die Gießform 31 können getrennt voneinander hergestellt werden und lediglich zwecks Durchführung der Zwischengußschweißung zusammengesetzt werden. Sie können jedoch grundsätzlich auch einstückig hergestellt sein.

Das obere offene Ende 36 der Gießform 31 bildet den Eingang des Kopfsteigers 24, der sich in Richtung auf den Schienenkopf 8 hin weiter konisch verjüngt und global eine Höhe H aufweist. Als Höhe H soll - in der Zeichenebene der Fig. 5 gesehen - ein Abstand zwischen dem oberseitigen Ende 36 der Gießform 31 und dem tiefsten Punkt 37 der Unterseite des Kopfseitensteigers 25 verstanden werden. Letztgenannte Unterseite weist ausgehend von ihrem einen, dem Fußsteiger 17 zugekehrten Ende ein geringfügiges Gefälle in Richtung auf die Mittelebene 9 hin auf.

Zwischen den Kopfflanken 14 des Schienenkopfes 8 einerseits und den diesen gegenüberliegenden Innenwandungen 22 der Formwandungen 28' ergibt sich ein durch die Parameter x und y gekennzeichneter, in Richtung zur Unterseite hin sich konisch verjüngender Querschnittsverlauf der Abschnitte 38 des Kopfsteigers 24. Hierbei bezeichnet x die horizontale Breite dieses Abschnitts zwischen dem Punkt 37 und der diesem gegenüberliegenden Kante des Schienenkopfes 8. Das Maß y bezeichnet den horizontalen Abstand zwischen einer, an den obersten Punkt des Schienenkopfprofils gelegten, sich parallel zur Spur der Mittelebene 9 erstreckenden Geraden von dem Punkt auf der Innenwandung 22, der dem Scheitelpunkt 10 des Schienenkopfes 8 horizontal gegenüberliegt. Der Punkt 37 entspricht dem Punkt auf der Innenwandung 22, der der untersten Kante der Kopfseitenflanke 14 des Schienenkopfes 8 horizontal gegenüberliegt. Ausgehend von den am oberen Ende 36 der Gießform befindlichen Eintrittsquerschnitt 39 des Kopfsteigers 24 ergibt sich somit eine kontinuierliche Querschnittsverengung des zu den beiden, den untersten Kanten der Kopfseitenflanken 14 benachbarten, durch die Maße x gekennzeichneten Abschnitten 38.

Die Kopfseitensteiger 25, die ausgehend von ihren, den Fußsteigern 17 zugekehrten Eintrittsquerschnitten eine geringfügige Querschnittserweiterung in Richtung auf den Schienenkopf aufweisen, sind im übrigen sowohl hinsichtlich der Bemessung und der Anordnung des gießraumseitigen Einmündungsquerschnitts in gleicher Weise wie das Ausführungsbeispiel entsprechend Fig. 3 ausgebildet.

Erfindungsgemäß stehen die Parameter x, y, H, B in einer funktionalen Abhängigkeit voneinander, wobei durch eine dementsprechende Bemessung dieser Parameter in gleicher Weise wie durch die Plazierung und Bemessung der gießraumseitigen Einmündungsquerschnitte der Kopfseitensteiger dazu beigetragen wird, die Bildung von Schrumpflunkern im Übergangsbereich zwischen Schienensteg und Schienenkopf zu verhindern und auf den Kristallisationsprozeß dahingehend einzuwirken, daß sich eine gerichtete, von unten nach oben fortschreitende Erstarrung ergibt.

Infolge der durch den Formenaufsatz 32 gegebenen verbesserten Wärmeisolierung des aluminothermischen Gemisches wird ein vorzeitiger Wärmeverlust nach eingeleiteter Reaktion verhindert, welches eine Absenkung der Gießtemperaturen zwecks Durchführung einer beruhigten Reaktion ermöglicht, ohne daß die Qualität der Schweißverbindung, beispielsweise durch eine unzureichende oberflächliche Aufschmelzung des Schienenstahls vermindert wird.

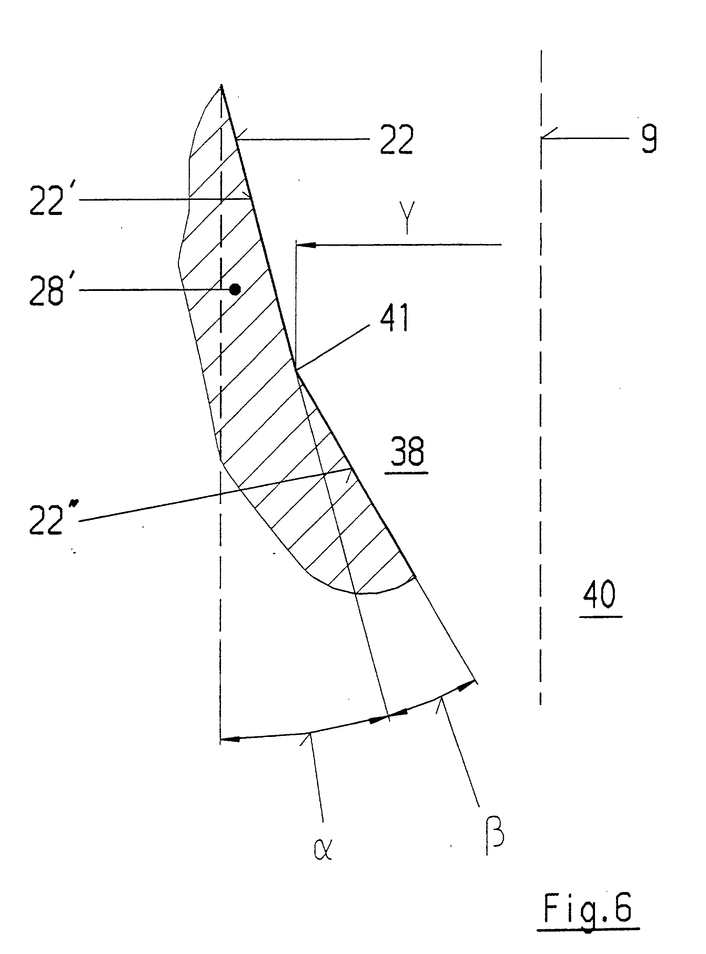

Wie Fig. 6 zeigt, weisen die Innenwandungen 22 der Gießform eine zur Mittelebene 9 sowie zur Unterseite 40 hin einwärts gerichtete Orientierung auf und bestehen global aus zwei Abschnitten 22', 22''. Der erstgenannte Abschnitt 22' beginnt an dem oberen Ende 36 der Gießform und es endet der letztgenannte Abschnitt 22' an dem Punkt 37 (Fig. 5), an dem die Formwandung 28 (Fig. 5) beginnt. Die Abschnitte 22', 22'' sind im wesentlichen als ebene Flächen ausgebildet, die gegenüber einer Vertikalebene unterschiedliche Neigungswinkel aufweisen. So ist der Neigungswinkel des Abschnitts 22' gegenüber der Vertikalebene mit α und der Neigungswinkel des Abschnitts 22'' gegenüber dem Abschnitt 22' mit β bezeichnet, so daß der Neigungswinkel des Abschnitts 22'' gegenüber einer Vertikalebene der Summe der Winkel α und β entspricht. Beide Winkel α und β werden in der zeichnerischen Darstellung gemäß Fig. 6 in Gegenrichtung zum Uhrzeigersinn als positive Werte gerechnet, so daß die Summe beider Winkel zumindest dem Wert des Winkels α entspricht. Die Abschnitte 22', 22'' schneiden einander aufgrund ihrer im allgemeinen unterschiedlichen Neigungswinkel im Bereich einer sich horizontal erstreckenden Kante 41. Die Innenwandung 22 erfährt in dem in Fig. 5 gezeigten Ausführungsbeispiel an dem genannten oberen Ende 36 einen Übergang in eine sich parallel zu der Mittelebene 9 erstreckende Wandung des Formenaufsatzes 32. Der Neigungswinkel der Innenwandung 22, ausgehend von dem Abschnitt (22'') jenseits des genannten Punktes 37 ist durch den dortigen Verlauf der Formwandung 28 bestimmt.

Erfindungsgemäß sind die Winkel α,β nach Maßgabe der den Ansprüchen entnehmbaren Bereiche bemessen, wobei auf diesem Wege eine geordnete, insbesondere von Spritzerscheinungen freie Strömung des schmelzflüssigen Stahles in Richtung auf den Stegbereich des Schienenprofils angestrebt wird. Wesentlich ist hier noch unter anderem, daß die Summe beider Winkel innerhalb des Bereichs von 15° bis 89° liegt.

Die gezeigte, durch zwei ebene Abschnitte 22', 22'' zusammengesetzte Ausbildung der Innenwandung 22 zwischen dem oberen Ende 36 und dem Punkt 37 ist lediglich beispielhaft zu verstehen. So kann dieser Bereich gleichermaßen durch einen stetig gekrümmten, insbesondere einen zur Innenseite des Kopfsteigers 24 konkav gekrümmten Flächenverlauf zwischen dem genannten Ende 36 und dem Punkt 37 gekennzeichnet sein. Die vorstehend zitierten Neigungswinkel α, β entsprechen in diesem Fall den örtlichen Neigungswinkeln an dem Ende 36 einerseits und dem Punkt 37 andererseits, wobei zwischen diesen diskreten Einzelwerten der Neigungswinkel ein kontinuierlicher Übergang gegeben ist.

In einem Grenzfall kann der Winkel β auch den Wert 0 annehmen, so daß sich ausgehend von dem oberen Ende 36 bis zu dem Punkt 37 ein geradliniger, ebener Flächenverlauf der Innenwandung 22 ergibt.

## Patentansprüche

1. Gießform für die Zwischengußschweißung zweier Schienenenden (1,2), bestehend aus an das Schienenprofil angepaßten, die zwischen den Schienenenden (1,2) bestehende Schweißfuge (4) überdeckenden, aus einem feuerfesten Werkstoff bestehenden Formwandungen, wobei der durch den Zwischenguß auszufüllende Gießraum im übrigen durch die Stirnseiten der Schienenenden (1,2) begrenzt wird und wobei in die Formwandungen zumindest ein System von Fußsteigern (17) und/oder Kopfsteigern (24) und Kopfseitensteigern (25) eingeformt ist,
**dadurch gekennzeichnet,**
- **daß** die Fläche A des gießraumseitigen Einmündungsguerschnitts eines Kopfseitensteigers (25) an die untere Kante der Kopfflanke (14) des Schienenkopfes (8) anschließt und sich aufwärts ausgehend von dieser erstreckt,
- **daß** die Fläche A nach Maßgabe der Dicke s des Schienensteges (7) in Abhängigkeit ferner von der Höhe h des Schienenkopfes (8) und der Breite L der Schweißfuge (4) bemessen ist, wobei 0,6 hL ≤ A ≤ 3,75 hL gilt und
- **daß** der Kopfsteiger (24) eine sich in Richtung auf den Schienenkopf (8) hin verjüngende Gestalt aufweist.

2. Gießform für die Zwischengußschweißung zweier Schienenenden (1,2), bestehend aus an das Schienenprofil angepaßten, die zwischen den Schienenenden (1,2) bestehende Schweißfuge (4) überdeckenden, aus einem feuerfesten Werkstoff bestehenden Formwandungen, wobei der durch den Zwischenguß auszufüllende Gießraum im übrigen durch die Stirnseiten der Schienenenden (1,2) begrenzt wird und wobei in die Formwandungen zumindest ein System von Fußsteigern (17) und/oder Kopfsteigern (24) und/oder Kopfseitensteigern (25) eingeformt ist,
**dadurch gekennzeichnet,**
- **daß** die Breite B des Kopfsteigers (24) nach Maßgabe der Breite b des Schienenkopfes (8) bemessen ist,
- **daß** die Höhe H des Kopfsteigers (24) nach Maßgabe der Höhe h des Schienenkopfes (8) bemessen ist,
- **daß** die Innenwandungen (22) des Kopfsteigers (24) - in der Projektion einer Querschnittsebene der Schienenenden (1,2) gesehen - mit den Kopfflanken (14) des Schienenkopfes (8) sich in Richtung auf den Schienenfuß (6) hin jeweils zwischen einer oberseitigen Breite y und einer unterseitigen Breite x verjüngende Querschnitte bilden,
- wobei das Maß x in dem Bereich von 0,001 b bis 0,1 b liegt und
- wobei das Maß y in dem Bereich von 1.01 x bis 5 x liegt.

3. Gießform nach Anspruch 1, **dadurch gekennzeichnet,**
- **daß** die Fläche A rechteckig bzw. quadratisch ausgestaltet ist,
- **daß** eine Seite b der Fläche A parallel zu der Grundseite (13) des Schienenfußes (6) und die andere Seite a senkrecht zu der Seite b ist
und
- **daß** die Seiten a und b nach Maßgabe der Dicke s des Schienensteges (7) bemessen sind, wobei 0,6 h ≤ a ≤ 1,5 h und/oder wobei L ≤ b ≤ 2,5 L gilt.

4. Gießform nach Anspruch 3, **dadurch gekennzeichnet, daß** bei Dicken s des Schienensteges (7) mit s ≤ 13 mm die Fläche A gemäß 0,75 hL ≤ A ≤ 3,75 hL bemessen ist.

5. Gießform nach Anspruch 3, **dadurch gekennzeichnet, daß** bei Dicken s des Schienensteges (7) mit s ≤ 13 mm die Seiten a und b gemäß 0,75 h ≤ a ≤ 1.5 h und/oder gemäß L ≤ b ≤ 2.5 L bemessen sind.

6. Gießform nach Anspruch 1 oder 3, **dadurch gekennzeichnet, daß** bei Dicken s des Schienensteges (7) mit s > 13 mm die Fläche A gemäß 0,6 hL ≤ A ≤ 3,75 hL bemessen ist.

7. Gießform nach Anspruch 3 oder 6, **dadurch gekennzeichnet, daß** bei Dicken s des Schienensteges (7) mit s > 13 mm die Seiten a und b gemäß 0,6 h ≤ a ≤ 1,5 h und/oder gemäß L ≤ b ≤ 2,5 L bemessen sind.

8. Gießform nach einem der Ansprüche 1 oder 3 bis 5, **dadurch gekennzeichnet,**
**daß** bei Dicken s des Schienensteges (7) mit s ≤ 13 mm die Fläche A gemäß 1,125 hL ≤ A ≤ 3,0375 hL bemessen ist.

9. Gießform nach einem der Ansprüche 1, 3 bis 5 oder 8, **dadurch gekennzeichnet,**
**daß** bei Dicken s des Schienensteges (7) mit s ≤ 13 mm die Seiten a und b mit 0,9 h ≤ a ≤ 1,35 h und/oder gemäß 1,25 L ≤ b ≤ 2,25 L bemessen sind.

10. Gießform nach einem der Ansprüche 1, 3, 6 oder 7, **dadurch gekennzeichnet,**
**daß** bei Dicken s des Schienensteges (7) mit s > 13 mm die Fläche A gemäß 0,875 hL ≤ A ≤ 2,8125 hL bemessen ist.

11. Gießform nach einem der Ansprüche 1, 3, 6, 7 oder 10, **dadurch gekennzeichnet,**
**daß** bei Dicken s des Schienensteges (7) mit s > 13 mm die Seiten a und b mit 0,7 h ≤ a ≤ 1,25 h und/oder gemäß 1,25 L ≤ b ≤ 2,25 L bemessen sind.

12. Gießform nach einem der Ansprüche 1, 3 bis 5, 8 oder 9, **dadurch gekennzeichnet,**
**daß**.bei Dicken s des Schienensteges (7) mit s ≤ 13 mm die Fläche A gemäß 1,575 hL ≤ A ≤ 2,4 hL bemessen ist.

13. Gießform nach einem der Ansprüche 1, 3 bis 5, 8,9 oder 12, **dadurch gekennzeichnet,**
**daß** bei Dicken s des Schienensteges (7) mit s ≤ 13 mm die Seiten a und b mit 1,05 h ≤ a ≤ 1,2 h und/oder 1,5 L ≤ b ≤ 2,0 L bemessen sind.

14. Gießform nach einem der Ansprüche 1, 3, 6, 7, 10 oder 11, **dadurch gekennzeichnet,**
**daß** bei Dicken s des Schienensteges (7) mit s > 13 mm die Fläche A gemäß 1,2 hL ≤ A ≤ 2,0 hL bemessen ist.

15. Gießform nach einem der Ansprüche 1, 3, 6, 7, 10, 11 oder 14, **dadurch gekennzeichnet,**
**daß** bei Dicken s des Schienensteges (7) mit s > 13 mm die Seiten a und b mit 0,8 h ≤ a ≤ 1,0 h und/oder gemäß 1,5 L ≤ b ≤ 2,0 L bemessen sind.

16. Gießform nach einem der vorangegangenen Ansprüche 1 bis 15, **dadurch gekennzeichnet,**
**daß** bei Dicken s des Schienensteges (7) mit 9 mm ≤ s ≤ 13 mm die Breite B des Kopfsteigers (24) nach Maßgabe der Breite b des Schienenkopfes (8) mit 1,2 b ≤ B ≤ 8 b bemessen ist.

17. Gießform nach Anspruch 16, **dadurch gekennzeichnet, daß** die Breite B des Kopfsteigers (24) mit 1,5 b ≤ B ≤ 5 b bemessen ist.

18. Gießform nach einem der Ansprüche 16 bis 17, **dadurch gekennzeichnet,**
**daß** die Breite B des Kopfsteigers (24) mit 1,8 b ≤ B ≤ 3,5 b bemessen ist

19. Gießform nach einem der Ansprüche 16 bis 18, **dadurch gekennzeichnet,**
**daß** die Höhe H des Kopfsteigers (24) nach Maßgabe der Höhe h des Schienenkopfes (8) mit 2 h ≤ H ≤ 20 h bemessen ist.

20. Gießform nach einem der Ansprüche 16 bis 19, **dadurch gekennzeichnet,**
**daß** die Höhe H des Kopfsteigers (24) nach Maßgabe der Höhe h des Schienenkopfes (8) mit 2,5 h ≤ H ≤ 10 h bemessen ist.

21. Gießform nach einem der Ansprüche 16 bis 20, **dadurch gekennzeichnet**
**daß** die Höhe H des Kopfsteigers (24) nach Maßgabe der Höhe h des Schienenkopfes (8) mit 3 h ≤ H ≤ 8 h bemessen ist.

22. Gießform nach einem der Ansprüche 1 bis 15, **dadurch gekennzeichnet,**
**daß** bei Dicken s des Schienensteges (7) mit s > 13 mm die Breite B des Kopfsteigers (24) nach Maßgabe der Breite b des Schienenkopfes (8) mit 1,2 b ≤ B ≤ 8 b bemessen ist.

23. Gießform nach Anspruch 22, **dadurch gekennzeichnet,**
**daß** die Breite B des Kopfsteigers (24) mit 1,5 b ≤ B ≤ 5 b bemessen ist.

24. Gießform nach Anspruch 22 oder 23, **dadurch gekennzeichnet,**
**daß** die Breite B des Kopfsteigers (24) mit 1,8 b ≤ B ≤ 4 b bemessen ist.

25. Gießform nach einem der Ansprüche 22 bis 24, **dadurch gekennzeichnet,**
**daß** die Höhe H des Kopfsteigers (24) nach Maßgabe der Höhe h des Schienenkopfes (8) mit 3 h ≤ H < 25 h bemessen ist.

26. Gießform nach einem der Ansprüche 22 bis 25, **dadurch gekennzeichnet,**
**daß** die Höhe H des Kopfsteigers (24) nach Maßgabe der Höhe h des Schienenkopfes (8) mit 3 h < H < 15 h bemessen ist.

27. Gießform nach einem der Ansprüche 22 bis 26, **dadurch gekennzeichnet,**
**daß** die Höhe H des Kopfsteigers (24) nach Maßgabe der Höhe h des Schienenkopfes (8) mit 3 h ≤ H < 10 h bemessen ist.

28. Gießform nach einem der Ansprüche 2 oder 16 bis 27, **dadurch gekennzeichnet,**
**daß** das Maß x in dem Bereich von 0,0025 b bis 0,075 b liegt und
**daß** das Maß y in dem Bereich von 1,025 x bis 2,5 x liegt.

29. Gießform nach Anspruch 28, **dadurch gekennzeichnet,**
**daß** das Maß x in dem Bereich von 0,01 b bis 0,1 b liegt und
**daß** das Maß y in dem Bereich von 1,075 x bis 1,5 x liegt.

30. Gießform nach einem der Ansprüche 1 bis 29, **gekennzeichnet durch** einen - zur Aufnahme unter anderem eines Reaktionstiegels bestimmten, aus einem feuerfesten, eine vorzugsweise gegenüber den übrigen Formwandungen erhöhte Wärmedämmfähigkeit aufweisenden Formenaufsatz (32).

31. Gießform nach einem der Ansprüche 1 bis 30, **dadurch gekennzeichnet,**
**daß** die Innenwandung (22) des Kopfsteigers (24) beginnend mit dem oberen offenen Ende (36) bis zu dem Bereich der Kopfseitensteiger (25) - in einer sich senkrecht zur Längsachse der Schienenenden (1,2) erstreckenden Querschnittsebene gesehen - einen sich ändernden Neigungswinkel aufweist.

32. Gießform nach Anspruch 31, **dadurch gekennzeichnet,**
- **daß** der Neigungswinkel (α) an dem oberen Ende (36) einen Wert α und an dem unteren Ende, insbesondere dem Punkt (37) des Kopfseitensteigers (25) einen Wert β aufweist,
- **daß** der Neigungswinkel β und der Neigungswinkel α nach Maßgabe der Relation β = z α bemessen sind,
- wobei die Summe der Neigungswinkel α + β entsprechend der Relation 15° ≤ α + β ≤ 89° bemessen ist,
- wobei für die Summe der Neigungswinkel α + β ferner gilt α + β ≥ α und
- wobei der Parameter z nach Maßgabe des Neigungswinkels α einem Wert zwischen 0,01 und 4,93 entspricht.

33. Gießform nach Anspruch 32, **dadurch gekennzeichnet,**
**daß** für einen Neigungswinkel α mit α ≤ 60° der Parameter z innerhalb des Bereichs 0,01 ≤ z ≤ 0,48 gewählt ist.

34. Gießform nach Anspruch 32, **dadurch gekennzeichnet,**
**daß** für einen Neigungswinkel α mit α ≤ 45° der Parameter z innerhalb des Bereichs 0,02 ≤ z ≤ 0,98 gewählt ist.

35. Gießform nach Anspruch 32, **dadurch gekennzeichnet,**
**daß** für einen Neigungswinkel α mit α ≤ 30° der Parameter z innerhalb des Bereichs 0,03 ≤ z < 1,96 gewählt ist.

36. Gießform nach Anspruch 32, **dadurch gekennzeichnet,**
**daß** für einen Neigungswinkel α mit α ≤ 20° der Parameter z innerhalb des Bereichs 0,05 ≤ z ≤ 3,45 gewählt ist.

37. Gießform nach einem der Ansprüche 32 bis 36, **dadurch gekennzeichnet,**
**daß** für einen Neigungswinkel α mit α ≤ 15° der Parameter z innerhalb des Bereichs 0,06 ≤ z ≤ 4,93 gewählt ist.

38. Gießform nach einem der Ansprüche 32 bis 37, **dadurch gekennzeichnet,**
**daß** die Innenwandungen (22) des Kopfsteigers (24), beginnend mit dem oberen Ende (36) aus wenigstens zwei eben ausgebildeten, aufeinanderfolgenden Abschnitten (22',22'') zusammengesetzt sind, wobei der Neigungswinkel (α) dem Neigungswinkel des oberen, an dem Ende (36) beginnenden Abschnitts (22') und wobei der Neigungswinkel (β) dem Neigungswinkel des unteren, im Bereich des Kopfseitensteigers (25) endenden Abschnitts (22') entspricht.

39. Gießform nach einem der Ansprüche 32 bis 37, **dadurch gekennzeichnet,**
**daß** die Innenwandungen (22) des Kopfsteigers (24) zwischen dessen oberem, durch den Neigungswinkel α charakterisierten Ende (36) und dem unteren, im Bereich des Kopfseitensteigers, insbesondere dessen Punkt (37) definierten, durch den Neigungswinkel ß gekennzeichneten Ende einen stetig gekrümmten, insbesondere zur Innenseite des Kopfsteigers (24) konkaven Flächenverlauf aufweisen.

## Claims

1. Cast mould for the intermediate cast-welding of two rail ends (1, 2), consisting of mould walls which are adapted to suit the rail profile, cover the weld joint (4) between the rail ends (1, 2) and consist of a refractory material, wherein the casting space to be filled by the intermediate cast is also defined by means of the end sides of the rail ends (1, 2) and wherein at least one system of base risers (17) and/or head risers (24) and head side risers (25) is formed in the mould walls, **characterised in that**
- the surface A of the casting space-side inlet cross-section of a head side riser (25) adjoins the lower edge of the head flank (14) of the rail head (8) and extends upwardly starting therefrom,
- the surface A is dimensioned according to the thickness s of the rail cross-piece (7) in dependence also upon the height h of the rail head (8) and the width L of the weld joint (4), wherein 0.6 hL ≤ A ≤ 3.75 hL and
- the head riser (24) comprises a shape which tapers in the direction of the rail head (8).

2. Cast mould for the intermediate cast-welding of two rail ends (1, 2), consisting of mould walls which are adapted to suit the rail profile, cover the weld joint (4) between the rail ends (1, 2) and consist of a refractory material, wherein the casting space to be filled by the intermediate cast is also defined by means of the end sides of the rail ends (1, 2) and wherein at least one system of base risers (17) and/or head risers (24) and/or head side risers (25) is formed in the mould walls, **characterised in that**
- the width B of the head riser (24) is dimensioned according to the width b of the rail head (8),
- the height H of the head riser (24) is dimensioned according to the height h of the rail head (8),
- the inner walls (22) of the head riser (24) - as seen in the projection of a cross-sectional plane of the rail ends (1, 2) - form with the head flanks (14) of the rail head (8) cross-sections which taper in the direction of the rail base (6) in each case between an upper-side width y and a lower-side width x,
- wherein the dimension x is in the range of 0.001 b to 0.1 b and
- the dimension y is in the range of 1.01 x to 5 x.

3. Cast mould according to claim 1, **characterised in that**
- the surface A is formed in a rectangular or square manner,
- one side b of the surface A is in parallel with the base side (13) of the rail base (6) and the other side a is perpendicular to the side b, and
- the sides a and b are dimensioned according to the thickness s of the rail cross-piece (7), wherein 0.6 h ≤ a ≤ 1.5 h and/or wherein L ≤ b ≤ 2.5 L.

4. Cast mould according to claim 3, **characterised in that** in the case of thicknesses s of the rail cross-piece (7) of s ≤ 13 mm the surface A is dimensioned according to 0.75 hL ≤ A ≤ 3.75 hL.

5. Cast mould according to claim 3, **characterised in that** in the case of thicknesses s of the rail cross-piece (7) of s ≤ 13 mm the sides a and b are dimensioned according to 0.75 h ≤ a ≤ 1.5 h and/or according to L ≤ b s 2.5 L.

6. Cast mould according to claim 1 or 3, **characterised in that** in the case of thicknesses s of the rail cross-piece (7) of s > 13 mm the surface A is dimensioned according to 0.6 hL ≤ A ≤ 3.75 hL.

7. Cast mould according to claim 3 or 6, **characterised in that** in the case of thicknesses s of the rail cross-piece (7) of s > 13 mm the sides a and b are dimensioned according to 0.6 h ≤ a ≤ 1.5 h and/or according to L ≤ b ≤ 2.5 L.

8. Cast mould according to any one of claims 1 or 3 to 5, **characterised in that** in the case of thicknesses s of the rail cross-piece (7) of s ≤ 13 mm the surface A is dimensioned according to 1.125 hL ≤ A ≤ 3.0375 hL.

9. Cast mould according to any one of claims 1, 3 to 5 or 8, **characterised in that** in the case of thicknesses s of the rail cross-piece (7) of s ≤ 13 mm the sides a and b are dimensioned by 0.9 h ≤ a ≤ 1.35 h and/or according to 1.25 L ≤ b ≤ 2.25 L.

10. Cast mould according to any one of claims 1, 3, 6 or 7, **characterised in that** in the case of thicknesses s of the rail cross-piece (7) of s > 13 mm the surface A is dimensioned according to 0.875 hL ≤ A ≤ 2.8125 hL.

11. Cast mould according to any one of claims 1, 3, 6, 7 or 10, **characterised in that** in the case of thicknesses s of the rail cross-piece (7) of s > 13 mm the sides a and b are dimensioned by 0.7 h ≤ a ≤ 1.25 h and/or according to 1.25 L ≤ b ≤ 2.25 L.

12. Cast mould according to any one of claims 1, 3 to 5, 8 or 9, **characterised in that** in the case of thicknesses s of the rail cross-piece (7) of s ≤ 13 mm the surface A is dimensioned according to 1.575 hL ≤ A ≤ 2.4 hL.

13. Cast mould according to any one of claims 1, 3 to 5, 8, 9 or 12, **characterised in that** in the case of thicknesses s of the rail cross-piece (7) of s ≤ 13 mm the sides a and b are dimensioned by 1.05 h ≤ a ≤ 1.2 h and/or 1.5 L ≤ b ≤ 2.0 L.

14. Cast mould according to any one of claims 1, 3, 6, 7, 10 or 11, **characterised in that** in the case of thicknesses s of the rail cross-piece (7) of s > 13 mm the surface A is dimensioned according to 1.2 hL ≤ A ≤ 2.0 hL.

15. Cast mould according to any one of claims 1, 3, 6, 7, 10, 11 or 14, **characterised in that** in the case of thicknesses s of the rail cross-piece (7) of s > 13 mm the sides a and b are dimensioned by 0.8 h ≤ a s 1.0 h and/or according 1.5 L ≤ b ≤ 2.0 L.

16. Cast mould according to any one of the preceding claims 1 to 15, **characterised in that** in the case of thicknesses s of the rail cross-piece (7) of 9 mm ≤ s ≤ 13 mm the width B of the head riser (24) is dimensioned according to the width b of the rail head (8) by 1.2 b ≤ B ≤ 8 b.

17. Cast mould according to claim 16, **characterised in that** the width B of the head riser (24) is dimensioned by 1.5 b ≤ B ≤ 5 b.

18. Cast mould according to any one of claims 16 to 17, **characterised in that** the width B of the head riser (24) is dimensioned by 1.8 b ≤ B ≤ 3.5 b.

19. Cast mould according to any one of claims 16 to 18, **characterised in that** the height H of the head riser (24) is dimensioned according to the height h of the rail head (8) by 2 h ≤ H ≤ 20 h.

20. Cast mould according to any one of claims 16 to 19, **characterised in that** the height H of the head riser (24) is dimensioned according to the height h of the rail head (8) by 2.5 h ≤ H ≤ 10 h.

21. Cast mould according to any one of claims 16 to 20, **characterised in that** the height H of the head riser (24) is dimensioned according to the height h of the rail head (8) by 3 h ≤ H ≤ 8 h.

22. Cast mould according to any one of the claims 1 to 15, **characterised in that** in the case of thicknesses s of the rail cross-piece (7) of s > 13 mm the width B of the head riser (24) is dimensioned according to the width b of the rail head (8) by 1.2 b ≤ B ≤ 8 b.

23. Cast mould according to claim 22, **characterised in that** the width B of the head riser (24) is dimensioned by 1.5 b ≤ B ≤ 5 b.

24. Cast mould according to claim 22 or 23, **characterised in that** the width B of the head riser (24) is dimensioned by 1.8 b ≤ B ≤ 4 b.

25. Cast mould according to any one of claims 22 to 24, **characterised in that** the height H of the head riser (24) is dimensioned according to the height h of the rail head (8) by 3 h ≤ H ≤ 25 h.

26. Cast mould according to any one of claims 22 to 25, **characterised in that** the height H of the head riser (24) is dimensioned according to the height h of the rail head (8) by 3 h ≤ H ≤ 15 h.

27. Cast mould according to any one of claims 22 to 26, **characterised in that** the height H of the head riser (24) is dimensioned according to the height h of the rail head (8) by 3 h ≤ H ≤ 10 h.

28. Cast mould according to any one of claims 2 or 16 to 27, **characterised in that** the dimension x is in the range of 0.0025 b to 0.075 b and that the dimension y is in the range of 1.025 x to 2.5 x.

29. Cast mould according to claim 28, **characterised in that** the dimension x is in the range of 0.01 b to 0.1 b and that the dimension y is in the range of 1.075 x to 1.5 x.

30. Cast mould according to any one of the claims 1 to 29, **characterised by** a mould attachment (32) which is intended to receive *inter alia* a reaction crucible, consists of a refractory material and comprises a heat-insulating capability which is preferably greater than the other mould walls.

31. Cast mould according to any one of claims 1 to 30, **characterised in that** the inner wall (22) of the head riser (24) comprises a changing angle of inclination beginning with the upper open end (36) as far as to the region of the head side risers (25) - as seen in a cross-sectional plane extending perpendicular to the longitudinal axis of the rail ends (1, 2).

32. Cast mould according to claim 31, **characterised in that**
- the angle of inclination (α) comprises a value α at the upper end (36) and comprises a value **β** at the lower end, in particular at the point (37) of the head side riser (25),
- the angle of inclination β and the angle of inclination α are dimensioned according to the relation β = z α,
- wherein the sum of the angles of inclination α + β is dimensioned according to the relation 15° ≤ α + β ≤ 89°,
- wherein α + β ≥ *α* also applies for the sum of the angles of inclination α + β, and
- wherein the parameter z according to the angle of inclination α corresponds to a value between 0.01 and 4.93.

33. Cast mould according to claim 32, **characterised in that** for an angle of inclination α of α ≤ 60° the parameter z is selected within the range 0.01 ≤ z ≤ 0.48.

34. Cast mould according to claim 32, **characterised in that** for an angle of inclination α of α ≤ 45° the parameter z is selected within the range 0.02 ≤ z ≤ 0.98.

35. Cast mould according to claim 32, **characterised in that** for an angle of inclination α of α ≤ 30° the parameter z is selected within the range 0.03 **≤** z s 1.96.

36. Cast mould according to claim 32, **characterised in that** for an angle of inclination α of α ≤ 20° the parameter z is selected within the range 0.05 ≤ z ≤ 3.45.

37. Cast mould according to any one of claims 32 to 36, **characterised in that** for an angle of inclination α of α ≤ 15° the parameter z is selected within the range 0.06 ≤ z ≤ 4.93.

38. Cast mould according to any one of claims 32 to 37, **characterised in that** beginning with the upper end (36), the inner walls (22) of the head riser (24) are composed of at least two planar, consecutive portions (22', 22"), wherein the angle of inclination (α) corresponds to the angle of inclination of the upper portion (22') beginning at the end (36) and wherein the angle of inclination (β) corresponds to the angle of inclination of the lower portion (22') ending in the region of the head side riser (25).

39. Cast mould according to any one of claims 32 to 37, **characterised in that** the inner walls (22) of the head riser (24) between its upper end (36), which is **characterised by** the angle of inclination α, and the lower end, which is defined in the region of the head side riser, in particular its point (37), and is **characterised by** the angle of inclination β, comprise a continuously curved surface progression which is in particular concave towards the inner side of the head riser (24).

## Revendications

1. Moule de coulée pour le soudage par coulée intermédiaire de deux extrémités de rail (1, 2), composé de parois de moule en matériau réfractaire adaptées au profil des rails, recouvrant le joint à souder (4) formé entre les extrémités de rail (1, 2), l'espace de coulée à remplir avec la coulée intermédiaire étant également délimité par les faces des extrémités de rail (1, 2),et au moins un système de tuyaux de montée de pied (17) et/ou de tête (24) et de tuyaux de montée de tête (25) étant formé dans les parois du moule, **caractérisé en ce que** :
- la surface A de la section d'embouchure d'un tuyau de montée de tête (25) du côté de l'espace de coulée se raccorde au bord inférieur du flanc de tête (14) de la tête de rail (8) et s'étend vers le haut à partir de celui-ci,
- **en ce que** la surface A est dimensionnée en fonction de l'épaisseur s de l'âme du rail (7) et en fonction de la hauteur de la tête du rail (8) et de la largeur L du joint à souder (4), de telle sorte que 0,6 hL ≤ A ≤ 3,75 hL, et
- **en ce que** le tuyau de montée de tête (24) présente une forme rétrécie en direction de la tête de rail (8).

2. Moule de coulée pour le soudage par coulée intermédiaire de deux extrémités de rail (1, 2), composé de parois de moule en matériau réfractaire adaptées au profil des rails, recouvrant le joint à souder (4) formé entre les extrémités de rail (1, 2), l'espace de coulée à remplir avec la coulée intermédiaire étant également délimité par les faces des extrémités de rail (1, 2), et au moins un système de tuyaux de montée de pied (17) et/ou de tête (24) et de tuyaux de montée de tête (25) étant formé dans les parois du moule, **caractérisé en ce que** :
- la largeur B du tuyau de montée de tête (24) dépend de la largeur b de la tète de rail (8),
- **en ce que** la hauteur H du tuyau de montée de tête (24) dépend de la hauteur (h) de la tête de rail (8),
- **en ce que** les parois intérieures (22) du tuyau de montée de tête (24), vues dans la projection d'un plan de coupe transversale des extrémités de rail (1, 2), forment avec les flancs de tête (14) de la tête de rail (8) des sections se rétrécissant vers le pied de rail (6) entre une largeur du côté supérieur y et une largeur du côté inférieur x,
- la dimension x étant comprise entre 0,001 b et 0,1 b,
- et la dimension y étant comprise entre 0,01 x et 5 x.

3. Moule de coulée selon la revendication 1, **caractérisé en ce que** :
- la surface A est de forme rectangulaire ou carrée,
- **en ce qu'**un côté b de la surface A est parallèle à la base (13) du pied de rail (6) et l'autre côté a est perpendiculaire au côté b,
- et **en ce que** les côtés a et b sont dimensionnés en fonction de l'épaisseur s de l'âme du rail (7), de telle sorte que 0,6 h ≤ a ≤ 1,5 h et/ou que L ≤ b ≤ ,25 L.

4. Moule de coulée selon la revendication 3, **caractérisé en ce que** si l'épaisseur s de l'âme du rail (7) est s ≤ 13 mm, la surface A a une dimension telle que 0,75 hL ≤ A ≤ 3,75 hL.

5. Moule de coulée selon la revendication 3, **caractérisé en ce que** si l'épaisseur s de l'âme du rail (7) est s ≤ 13 mm, les côtés a et b ont des dimensions telles que 0,75 h ≤ a ≤ 1,5 h et/ou que L ≤ b ≤ 2,5 L.

6. Moule de coulée selon la revendication 1 ou 3, **caractérisé en ce que** si l'épaisseur s de l'âme du rail (7) est s > 13 mm, la surface A a une dimension telle que 0,6 hL ≤ A ≤ 3,75 hL.

7. Moule de coulée selon la revendication 3 ou 6, **caractérisé en ce que** si l'épaisseur s de l'âme du rail (7) est s > 13 mm, les côtés a et b ont des dimensions telles que 0,6 h ≤ a ≤ 1,5 h et/ou que L ≤ b ≤ 2,5 L.

8. Moule de coulée selon l'une ou l'ensemble des revendications 1 ou 3 à 5, **caractérisé en ce que** si l'épaisseur s de l'âme du rail (7) est s ≤ 13 mm, la surface A a une dimension telle que 1,125 hL ≤ A ≤ 3,0375 hL.

9. Moule de coulée selon l'une ou l'ensemble des revendications 1, 3 à 5 ou 8, **caractérisé en ce que** si l'épaisseur s de l'âme du rail (7) est s ≤ 13 mm, les côtés a et b ont des dimensions telles que 0,9 h ≤ a ≤ 1,35 h et/ou que 1,25 L ≤ b ≤ 2,25 L.

10. Moule de coulée selon l'une ou l'ensemble des revendications 1, 3, 6 ou 7, **caractérisé en ce que** si l'épaisseur s de l'âme du rail (7) est s > 13 mm, la surface A a une dimension telle que 0,875 hL ≤ A ≤ 2,8125 hL.

11. Moule de coulée selon l'une ou l'ensemble des revendications 1, 3, 6, 7 ou 10, **caractérisé en ce que** si l'épaisseur s de l'âme du rail (7) est s > 13 mm, les côtés a et b ont des dimensions telles que 0,7 h ≤ a ≤ 1,25 h et/ou que 1,25 L ≤ b ≤ 2,25 L.

12. Moule de coulée selon l'une ou l'ensemble des revendications 1, 3 à 5, 8 ou 9, **caractérisé en ce que** si l'épaisseur s de l'âme du rail (7) est s ≤ 13 mm, la surface A a une dimension telle que 1,575 hL ≤ A ≤ 2,4 hL.

13. Moule de coulée selon l'une ou l'ensemble des revendications 1, 3 à 5, 8, 9 ou 12, **caractérisé en ce que** si l'épaisseur s de l'âme du rail (7) est s ≤ 13 mm, les côtés a et b ont des dimensions telles que 1,05 h ≤ a ≤ 1,2 h et/ou que 1,5 L ≤ b ≤ 2,0 L.

14. Moule de coulée selon l'une ou l'ensemble des revendications 1, 3, 6, 7, 10 ou 11, **caractérisé en ce que** si l'épaisseur s de l'âme du rail (7) est s > 13 mm, la surface A a une dimension telle que 1,2 hL ≤ A ≤ 2,0 hL.

15. Moule de coulée selon l'une ou l'ensemble des revendications 1, 3, 6, 7, 10, 11 ou 14, **caractérisé en ce que** si l'épaisseur s de l'âme du rail (7) est s > 13 mm, les côtés a et b ont des dimensions telles que 0,8 h ≤ a ≤ 1,0 h et/ou que 1,5 L ≤ b ≤ 2,0 L.

16. Moule de coulée selon l'une ou l'ensemble des revendications 1 à 15, **caractérisé en ce que** si l'épaisseur s de l'âme du rail (7) est telle que 9 mm ≤ s ≤ 13 mm, la largeur B du tuyau de montée de tête (24) dépend de la largeur b du tête de rail (8) selon la relation 1,2 b ≤ B ≤ 8 b.

17. Moule de coule selon la revendication 16, **caractérisé en ce que** la largeur B du tuyau de montée de tête (24) a une dimension telle que 1,5 b ≤ B ≤ 5 b.

18. Moule de coulée selon l'une ou l'ensemble des revendications 16 à 17, **caractérisé en ce que** la largeur B du tuyau de montée de tête (24) a une dimension telle que 1,8 b ≤ B ≤ 3,5 b.

19. Moule de coulée selon l'une ou l'ensemble des revendications 16 à 18, **caractérisé en ce que** la hauteur H du tuyau de montée de tête (24) dépend de la hauteur h de la tête de rail (8) selon la relation 2 h ≤ H ≤ 20 h.

20. Moule de coulée selon l'une ou l'ensemble des revendications 16 à 19, **caractérisé en ce que** la hauteur H du tuyau de montée de tête (24) dépend de la hauteur h de la tête de rail (8) selon la relation 2,5 h ≤ H ≤ 10 h.

21. Moule de coulée selon l'une ou l'ensemble des revendications 16 à 20, **caractérisé en ce que** la hauteur H du tuyau de montée de tête (24) dépend de la hauteur h de la tête de rail (8) selon la relation 3 h ≤ H ≤ 8 h.

22. Moule de coulée selon l'une ou l'ensemble des revendications 1 à 15, **caractérisé en ce que** si l'épaisseur s de l'âme du rail (7) est de s > 13 mm, la largeur B du tuyau de montée de tête (24) dépend de la largeur b de la tête de rail (8) selon la relation 1,2 b ≤ B ≤ 8 b.

23. Moule de coulée selon la revendication 22, **caractérisé en ce que** la largeur B du tuyau de montée de tête (24) a une dimension telle que 1,5 b ≤ B ≤ 5 b.

24. Moule de coulée selon l'une quelconque des revendications 22 ou 23, **caractérisé en ce que** la largeur B du tuyau de montée de tête (24) a une dimension telle que 1,8 b ≤ B ≤ 4 b.

25. Moule de coulée selon l'une ou l'ensemble des revendications 22 à 24, **caractérisé en ce que** la hauteur H du tuyau de montée de tête (24) dépend de la hauteur h de la tête de rail (8) selon la relation 3 h ≤ H ≤ 25 h.

26. Moule de coulée selon l'une ou l'ensemble des revendications 22 à 25, **caractérisé en ce que** la hauteur H du tuyau de montée de tête (24) dépend de la hauteur h de la tête de rail (8) selon la relation 3 h ≤ H ≤ 15 h.

27. Moule de coulée selon l'une ou l'ensemble des revendications 22 à 26, **caractérisé en ce que** la hauteur H du tuyau de montée de tête (24) dépend de la hauteur h de la tête de rail (8) selon la relation 3 h ≤ H ≤ 10 h.

28. Moule de coulée selon l'une ou l'ensemble des revendications 2 ou 16 à 27, **caractérisé en ce que** la dimension x est comprise entre 0,0025 b et 0,075 b et **en ce que** la dimension y est comprise entre 1,025 x et 2,5 x.

29. Moule de coulée selon la revendication 28, **caractérisé en ce que** la dimension x est comprise entre 0,01 b et 0,1 b et **en ce que** la dimension y est comprise entre 1,075 x et 1,5 x.

30. Moule de coulée selon l'une ou l'ensemble des revendications 1 à 29, **caractérisé en ce qu'**il comporte un chapeau de moule (32) destiné à recevoir, entre autres, un creuset de réaction et fait d'un matériau réfractaire présentant une capacité d'isolation thermique supérieure à celle des autres parois du moule.

31. Moule de coulée selon l'une ou l'ensemble des revendications 1 à 30, **caractérisé en ce que** la paroi intérieure (22) du tuyau de montée de tête (24) présente, à partir de l'extrémité supérieure ouverte (36) et jusqu'au niveau du tuyau de montée de tête latéral (25) un angle d'inclinaison qui se modifie dans un plan de section perpendiculaire à l'axe longitudinal des extrémités de rail (1, 2).

32. Moule de coulée selon la revendication 31, **caractérisé en ce que** :
- l'angle d'inclinaison (α) a une valeur α à l'extrémité supérieure (36) et une valeur β à l'extrémité inférieure, et notamment au point (37) du tuyau de montée de tête latéral (25),
- **en ce que** l'angle d'inclinaison β et l'angle d'inclinaison α sont dimensionnés selon la relation **β** = z α,
- la somme des angles d'inclinaison α + **β** étant telle que 15° ≤ α + β ≤ 89°,
- la somme des angles d'inclinaison α + **β** étant telle en outre que α + β ≥ α,
- le paramètre z ayant, selon l'angle d'inclinaison α, une valeur comprise entre 0,01 et 4,93.

33. Moule de coulée selon la revendication 32, **caractérisé en ce que** si l'angle d'inclinaison α est de α ≤ 60°, le paramètre z est sélectionné dans la plage 0,01 ≤ z ≤ 0,48.

34. Moule de coulée selon la revendication 32, **caractérisé en ce que** si l'angle d'inclinaison α est de α ≤ 45°, le paramètre z est sélectionné dans la plage 0,02 ≤ z ≤ 0,98.

35. Moule de coulée selon la revendication 32, **caractérisé en ce que** si l'angle d'inclinaison α est de α ≤ 30°, le paramètre z est sélectionné dans la plage 0,03 ≤ z ≤ 1,96.

36. Moule de coulée selon la revendication 32, **caractérisé en ce que** si l'angle d'inclinaison α est de α ≤ 20°, le paramètre z est sélectionné dans la plage 0,05 ≤ z ≤ 3,45.

37. Moule de coulée selon la revendication 32, **caractérisé en ce que** si l'angle d'inclinaison α est de α ≤ 15°, le paramètre z est sélectionné dans la plage 0,06 *≤* z ≤ 4,93

38. Moule de coulée selon l'une ou l'ensemble des revendications 32 à 37, **caractérisé en ce que** les parois intérieures (22) du tuyau de montée de tête (24) comprennent, à partir de l'extrémité supérieure (36), au moins deux parties (22', 22") successives planes, l'angle d'inclinaison (α) correspondant à l'angle d'inclinaison de la partie supérieure (22') qui commence à l'extrémité (36) et l'angle d'inclinaison (β) à l'angle d'inclinaison de la partie inférieure (22') qui se termine au niveau du tuyau de montée de tête latéral (25).

39. Moule de coulée selon l'une ou l'ensemble des revendications 32 à 37, **caractérisé en ce que** les parois intérieures (22) du tuyau de montée de tête (24) présentent entre leur extrémité supérieure (36) **caractérisée par** l'angle d'inclinaison α et l'extrémité inférieure définie au niveau du tuyau de montée de tête latéral et en particulier du point (37) de celui-ci et **caractérisée par** l'angle d'inclinaison (β) une surface à courbure continue, en particulier concave vers la face intérieure du tuyau de montée de tête (24).
